# EUROPEAN PATENT SPECIFICATION

(11) **EP 3 962 018 B1**
(45) Date of publication and mention of the grant of the patent: **28.05.2025**
(21) Application number: 20798033.5
(22) Date of filing: 16.04.2020
(51) Int. Cl.: H04L 67/141, H04L 67/146, H04L 69/22, H04L 65/1016, H04L 65/1059, H04L 65/1069, H04L 65/61, H04L 65/65

(54) **METHOD AND DEVICE FOR REAL-TIME MEDIA STREAM ACCESS, COMMUNICATION DEVICE, AND TERMINAL**
VERFAHREN UND VORRICHTUNG FÜR ECHTZEIT-MEDIENSTROMZUGRIFF, KOMMUNIKATIONSVORRICHTUNG UND ENDGERÄT
PROCÉDÉ ET DISPOSITIF POUR ACCÉDER À DES FLUX MULTIMÉDIAS EN TEMPS RÉEL, DISPOSITIF DE COMMUNICATION ET TERMINAL

(30) Priority: 28.04.2019 CN 201910351703
(43) Date of publication of application: 02.03.2022
(73) Proprietor: ZTE Corporation, Shenzhen, Guangdong 518057 (CN)
(72) Inventor: ZHANG, Lu, Shenzhen, Guangdong 518057 (CN); ZENG, Deyong, Shenzhen, Guangdong 518057 (CN); MIAO, Yongsheng, Shenzhen, Guangdong 518057 (CN); WANG, Mengxiao, Shenzhen, Guangdong 518057 (CN)
(74) Representative: Gevers Patents
(86) International application number: PCT/CN2020/085179
(87) International publication number: WO 2020/221018

(56) References cited:
- WO-A1-2008/155174
- CN-A- 101 378 535
- CN-A- 101 447 893
- US-A1- 2008 219 265
- NOKIA: "Service information", 3GPP TSG-SA2 MEETING #38 TDOC S2-040997, 20 February 2004 (2004-02-20), XP050247875, DOI: 20200706153751Y

## Description

### TECHNICAL FIELD

The present disclosure relates to, but is not limited to, a method and apparatus for real-time media stream access, a communication device, and a terminal.

### BACKGROUND

IP multimedia subsystem (IMS) is a subsystem supporting IP multi-media services proposed by a third-generation partnership project (3GPP), which is a direction of developing multi-media communication. As an application subsystem in the 4G era, IMS enables well-qualified communications between persons in the 4G era, a significant characteristic of IMS is the use of a session initial protocol (SIP) system in which the communication has nothing to do with an access mode, and having various capabilities such as separation between control functions and carrying functions of a variety of multi-media services, separation between a call and a session, separation between an application and a service, separation between a business and a network, convergence of a mobile network and an Internet service, and the like.

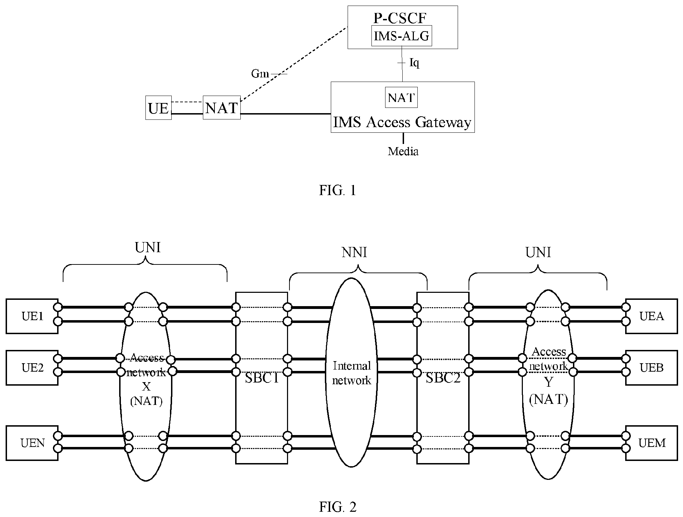

In the 3GPP TS 23.228 standard, logical functions of an IMS application level gateway (ALG) and an IMS access gateway are defined (see FIG.1). In actual applications, the above two logical functions are combined into a proxy call session control function (P-CSCF) or a session border controller (SBC), which serves as a boundary control device and provides functions between an access network and an IMS core network such as net address translation (NAT) traversal, access control, quality of service (QoS) control, signaling and bearer security, IP interworking, and the like.

Real-time media streams sent or received by the terminal needs to be forwarded by the SBC. Because packets sent by the terminal usually go through the NAT, the address and port of the SBC at which the media packet actually arriving are different from those carried in a SIP signaling of the terminal. In order to obtain the IP address and port information after the NAT of the terminal, a conventional method is that the SBC usually determines a correspondence between the SBC and the terminal by detecting information of the media packet arriving at a specified local port of the SBC in a manner of first packet learning (see Table 1).

**Table 1 Terminal information table created through first packet learning**

| Terminal identifier | IP address of the terminal after NAT | Port of the terminal after NAT | IP address at local end of SBC | Port at local end of SBC |
|---|---|---|---|---|
| 138xxxx | 221.135.8.9 | 17533 | 202.198.5.5 | 10000 |
| 139xxxx | 211.178.9.10 | 24550 | 202.198.5.5 | 20000 |
| ...... | ...... | ...... | ...... | ...... |

The above method may recognize the IP address and port number of the terminal after NAT, however, this method has defects such as occupation of excessive ports.

(US2008219265A1) provides a private communications network comprising: a plurality of communications devices at private communications network stations; a proxy server coupling said plurality of communications devices to a network; a Session Border Controller (SBC) connected to the network and listening for private network voice communications originating form one of said plurality of communications devices, said SBC adding a path header to identified said private network voice communications; and a softswitch adding a route header to said identified private network voice communications responsive to said path header, all identified private network voice communications passing through a common SBC port.

### SUMMARY

In one aspect, the present disclosure provides a method for real-time media stream access, which is defined in independent claim 1.

In another aspect, the present disclosure provides a method for real-time media stream access, which is defined in independent claim 11.

In still another aspect, the present disclosure provides a communication device, which is defined in independent 12.

In still another aspect, the present disclosure provides a terminal, which is defined in independent 13.

In still another aspect, the present disclosure provides a computer readable storage medium, which is defined in independent 14.

Further advantageous embodiments of the present disclosure are indicated in the dependent claims.

It is to be understood that both the forgoing general description the following detailed description are exemplary only, and are not restrictive of the present disclosure.

### BRIEF DESCRIPTION OF THE DRAWINGS

FIG. 1 is a schematic diagram of logical functions of an IMS application level gateway and an IMS access gateway;
FIG. 2 is a schematic diagram of a media stream access mode in a related technology;
FIG. 3 is a schematic diagram of a system architecture according to an embodiment of the present disclosure;
FIG. 4 is a flowchart of a method for real-time media stream access (applied at a communication device) according to an embodiment of the present disclosure;
FIG. 5 is a flowchart of a method for real-time media stream access (applied at a terminal) according to an embodiment of the present disclosure;
FIG. 6 is a flowchart of a method for real-time media stream access (applied to an IMS system) according to an embodiment of the present disclosure;
FIG. 7 is a schematic diagram of a network side allocating a port for each real-time media stream according to an embodiment of the present disclosure;
FIG. 8 is a schematic diagram of a network side allocating a unified port for each real-time media stream according to an embodiment of the present disclosure;
FIG. 9 is a user side media processing logic diagram illustrating a processing logic of SBC for a user side media according to an embodiment of the present disclosure;
FIG. 10 is a network side media processing logic diagram illustrating a processing logic of SBC for a network side media according to an embodiment of the present disclosure;
FIG. 11 is a flowchart of a call in an IMS network of an application example of the present disclosure;
FIG. 12 is a flowchart of SBC signaling negotiation in an IMS network according to an application example of the present disclosure, in which a caller does not support media stream identifier negotiation, and a callee supports the media stream identifier negotiation.
FIG. 13 is a flowchart of SBC signaling negotiation in an IMS network according to an application example of the present disclosure, in which a caller supports media stream identifier negotiation, and a callee does not support the media stream identifier negotiation.
FIG. 14 is a flowchart of SBC signaling negotiation in an IMS network according to an application example of the present disclosure, in which a caller does not support media stream identifier negotiation, and a calling side SBC directly denies the negotiation;
FIG. 15 is a flowchart of SBC signaling negotiation in an IMS network according to an application example of the present disclosure, in which a callee does not support media stream identifier negotiation, and a called side SBC directly denies the negotiation;
FIG. 16 is a schematic diagram of an apparatus for real-time media stream access (applied to a communication device) according to an embodiment of the present disclosure;
FIG. 17 is a schematic diagram of an apparatus for real-time media stream access (applied to a terminal) according to an embodiment of the present disclosure;
FIG. 18 is a schematic composition diagram of a communication device according to an embodiment of the present disclosure; and
FIG. 19 is a schematic composition diagram of a terminal according to an embodiment of the present disclosure.

### DETAILED DESCRIPTION

The embodiments of the present disclosure are described in details with reference to the accompanying drawings.

The operations shown in the flowchart of the accompanying drawings may be performed in a computer system such as a set of computer executable instructions. Although a logical order is shown in the flowchart, in some cases the operations shown or described may be performed in other different orders.

Currently, a method for SBC accessing media streams of a terminal has the following situations.
1. A excessive number of used ports at the SBC side and a high demand for public network IP addresses.
   Referring to FIG. 2, different port numbers need to be respectively allocated to each terminal on the SBC in this method, and a correspondence is created through detection of packets sent to a local port. A single IP address can only have up to 65535 ports, which means that a single IP address supports up to 65535 media channels. If it is desired to increase the number of media channels, the number of IP addresses needs to be increased. With the deployment of a 5G network, the access number of terminals has increased dramatically, and the existing mode is not enough to meet the requirements.
2. Easy to be maliciously scanned and occupied.

When the IP address of SBC is obtained by a malicious software, it is possible to construct a media packet and send the media packet to all the ports. The SBC does not judge a content of the media, but only determine whether it is a media packet, which makes the SBC misconception that the media packet constructed is a real one so that the SBC allocates corresponding port to the malicious software, thus resulting in unauthorized occupation of the port.

In embodiments of the present disclosure, media stream identifier negotiation and authentication are added, and functions such as secure access of a media stream and anti-malicious attack are provided.

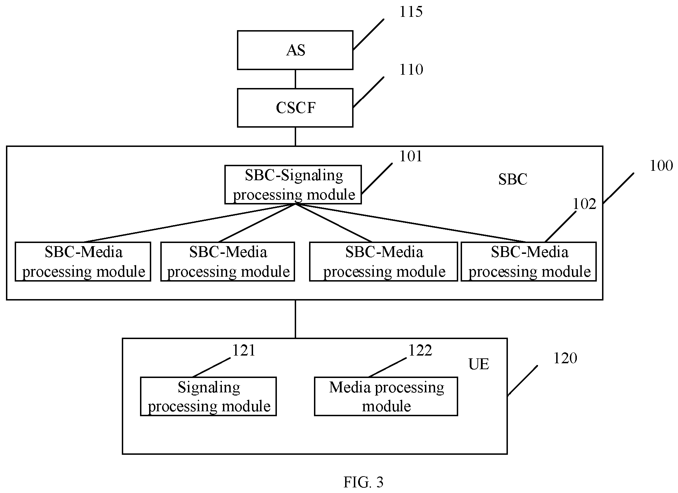

Referring to FIG. 3, an IMS network architecture in the present disclosure mainly includes following network elements.

SBC100 is configured to provide an access service for a terminal, and may include the following in the embodiments of the present disclosure.

SBC - a signaling processing module 101 is configured to allocate a media stream identifier to a media stream, or record the media stream identifier when receiving the media stream identifier, and notify a media processing module 102 of the media stream identifier.

SBC - a media processing module 102 is configured to verify the media stream identifier and establish a media packet transmission path according to a preset policy.

A call session control function (CSCF) 110 is configured for service triggering and call routing, and has no special requirements in the embodiments of the present disclosure.

An application server (AS) 115 is configured to provide a communication service for a user, and has no special requirements in the embodiments of the present disclosure.

A terminal (UE) 120 is configured to indicate in a call request/response that a media authentication capability is supported, record the media stream identifier, and carry the media stream identifier in the media packet. And the terminal may include the following modules.

A signaling processing module 121 is configured to indicate in the call request/response that the media authentication capability is supported, record the media stream identifier, and transmit the media stream identifier and an IP address and port information of the SBC to a media processing module 122.

The media processing module 122 is configured to send the media packet to the IP address and the port of the SBC, and carry the media stream identifier in the media packet.

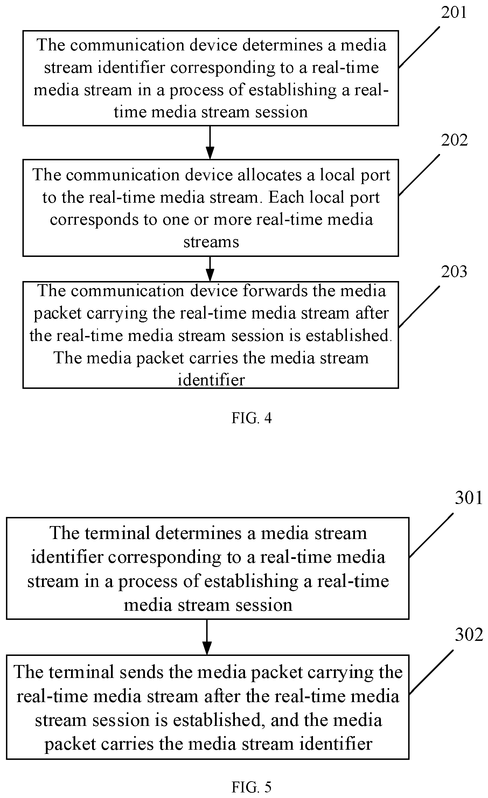

As shown in FIG. 4, a method for real-time media stream access in an embodiment of the present disclosure, applied at a communication device, includes the following operations.

In 201, the communication device determines a media stream identifier corresponding to a real-time media stream in a process of establishing a real-time media stream session.

The communication device may include an SBC that may be a calling side SBC or a called side SBC.

A case where the communication device includes the calling side SBC is described as follows.

In an embodiment, the media stream identifier is allocated by the communication device. The operation 201 may include the following. That is, the communication device receives a service request sent by the calling terminal for the real-time media stream, the service request carries a capability of supporting media stream authentication, and the communication device allocates a globally unique identifier as the media stream identifier corresponding to the real-time media stream.

In an embodiment, the media stream identifier is allocated by a calling terminal, and the communication device determines whether the media stream identifier is available. The operation 201 may include the following. That is, the communication device receives a service request sent by the calling terminal for the real-time media stream, and the service request carries the capability of supporting media stream authentication and the media stream identifier allocated by the calling terminal. In response to determining that the media stream identifier allocated by the calling terminal is not occupied, the communication device determines that the media stream identifier allocated by the calling terminal as the media stream identifier corresponding to the real-time media stream.

In an embodiment, the media stream identifier is allocated by the calling terminal, the communication device determines whether the media stream identifier is available, and the communication device allocates the media stream identifier when the media stream identifier is not available. The operation 201 may include the following. That is, the communication device receives the service request sent by the calling terminal for the real-time media stream, and the service request carries the capability of supporting media stream authentication and the media stream identifier allocated by the calling terminal. In response to determining that that the media stream identifier allocated by the calling terminal is occupied, the communication device allocates a globally unique identifier as the media stream identifier corresponding to the real-time media stream, and the communication device notifies the calling terminal of the media stream identifier corresponding to the real-time media stream.

In an embodiment, the communication device receives the service request sent by the calling terminal for the real-time media stream, and the service request does not carry the capability of supporting media stream authentication. The communication device denies access of the calling terminal.

When the calling terminal does not support the media stream authentication capability, the communication device may directly deny the access of the calling terminal, or may perform compatibility processing according to existing processes.

For the calling side SBC and the called side SBC, in an embodiment, a response for the service request is received, it is determined that the response does not carry the media stream identifier, the media stream identifier corresponding to the real-time media stream is added to the response, and the response carrying the media stream identifier is forwarded.

For the calling side SBC and the called side SBC, in an embodiment, the response for the service request is received, it is determined that the response carries the media stream identifier, the media stream identifier carried in the response is compared with the media stream identifier corresponding to the real-time media stream to determine whether the media stream identifier carried in the response is consistent with the media stream identifier corresponding to the real-time media stream, the media stream identifier carried in the response is replaced with the media stream identifier corresponding to the real-time media stream in response to determining that the media stream identifier carried in the response is inconsistent with the media stream identifier corresponding to the real-time media stream, and the response is forwarded.

Herein, the response is forwarded directly in response to determining that the media stream identifier carried in the response is consistent with the media stream identifier corresponding to the real-time media stream.

In 202, the communication device allocates a local port to the real-time media stream. Each local port corresponds to one or more real-time media streams.

In the embodiments of the present disclosure, a plurality of real-time media streams may share one local port. When establishing a correspondence between one local port and a plurality of real-time media streams, the SBC determines a total bandwidth corresponding to all the media streams to ensure that a traffic of a UDP port does not exceed a traffic range of a physical port.

In 203, the communication device forwards the media packet carrying the real-time media stream after the real-time media stream session is established. The media packet carries the media stream identifier.

In the embodiments of the present disclosure, a media stream identifier of the terminal is carried in the media packet, and a plurality of real-time media streams may share one local port, thereby improving a utilization rate of media ports, increasing a system capacity, and meeting a requirement of access of super-large-scale terminals.

In an embodiment, the method further includes the following operations.

The communication device performs media stream validity judgment by checking the media stream identifier in the media packet.

The performing of the media stream validity judgment may include the following. That is, the communication device determines that the real-time media stream is valid in response to determining that the media stream identifier carried in the media packet is included in one or more media stream identifiers corresponding to the local port, and the communication device determines that the real-time media stream is invalid in response to determining that the media stream identifier carried in the media packet is not included in the one or more media stream identifiers corresponding to the local port.
1. With respect to determining that the real-time media stream is valid.

A forwarding route corresponding to source address information in the media packet is recorded, and subsequent media packets carrying the real-time media stream are directly forwarded after being received.

The source address information includes a combination of a source IP address and a port number (i.e., IP+Port).

When the communication device determines that the source address information in the received media packet has no corresponding forwarding route, the media stream validity judgment is performed.

The SBC establishes a correspondence between the media stream identifier and source IP+Port of the terminal to implement fast forwarding.

A network side of SBC may allocate a separate IP+Port combination for each real-time media stream to implement fast packet forwarding. The network side of the SBC may adopt a method in which a plurality of real-time media streams share one port. The network side determines a forwarding rule by analyzing the globally unique media stream identifier in the media packet.

2. With respect to determining that the real-time media stream is invalid.

The media message carrying the real-time media stream is discarded.

In an embodiment, when it is determined that the real-time media stream is invalid, the source address information in the media message carrying the real-time media stream is recorded as a blacklist, and subsequent media messages carrying the source address information are directly discarded when being received.

In this embodiment of the present disclosure, secure access of media streams is provided to prevent malicious attacks by performing the media stream validity judgment.

As shown in FIG. 5, a method for real-time media stream access according to an embodiment of the present disclosure is applied at a terminal, which includes the following operations.

In 301, the terminal determines a media stream identifier corresponding to a real-time media stream in a process of establishing a real-time media stream session.

In an embodiment, when the terminal is a calling terminal, the media stream identifier is allocated by the communication device. The operation 301 includes the following. That is, the terminal sends a service request for the real-time media stream, and the service request carries a capability of supporting media stream authentication. The terminal receives a response for the service request, and the response carries the media stream identifier.

In an embodiment, when the terminal is a calling terminal, the media stream identifier is allocated by the terminal and determined by the communication device. The operation 301 includes the following. That is, the terminal sends a service request for the real-time media stream, and the service request carries a capability of supporting media stream authentication and a media stream identifier allocated by the calling terminal. The terminal receives a response for the service request, and determines the media stream identifier corresponding to the real-time media stream according to the media stream identifier carried in the response.

In an embodiment, when the terminal is a called terminal, the operation 301 includes the following. That is, the terminal receives a service request for the real-time media stream, and obtains the media stream identifier from the service request.

In 302, the terminal sends the media packet carrying the real-time media stream after the real-time media stream session is established, and the media packet carries the media stream identifier.

In an embodiment, the media packet includes a real-time transport protocol (RTP) packet, and the terminal carries a parameter of the media stream identifier in a synchronization source SSRC field of the RTP packet.

In an embodiment, the terminal extends the RTP packet, and carries the media stream identifier in an extended header of the RTP packet.

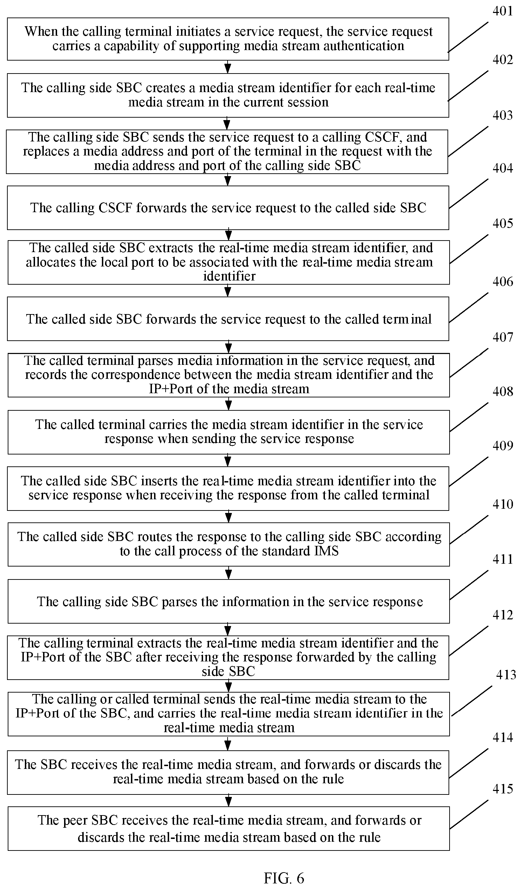

As shown in FIG. 6, a real-time media stream access process of an embodiment of the present disclosure may include the following operations.

In 401, when the calling terminal initiates a service request, the service request carries a capability of supporting media stream authentication.

In 402, the calling side SBC creates a globally unique identifier for each real-time media stream in the current session when receiving the service request from the calling terminal, and inserts the unique identifier into the service request.

The SBC records a correspondence between a terminal user identifier and the real-time media stream identifier at the local end, and designates a local port for each real-time media stream. A plurality of real-time media streams may share one local port.

In an embodiment, the SBC determines a total bandwidth corresponding to all media streams when establishing a correspondence between one local port and a plurality of real-time media streams, to ensure that a traffic of a UDP port does not exceed a traffic range of a physical port.

In 403, the calling side SBC replaces a media address and port of the terminal in an original SIP request with the media address and port of the calling side SBC when sending the service request to a calling CSCF.

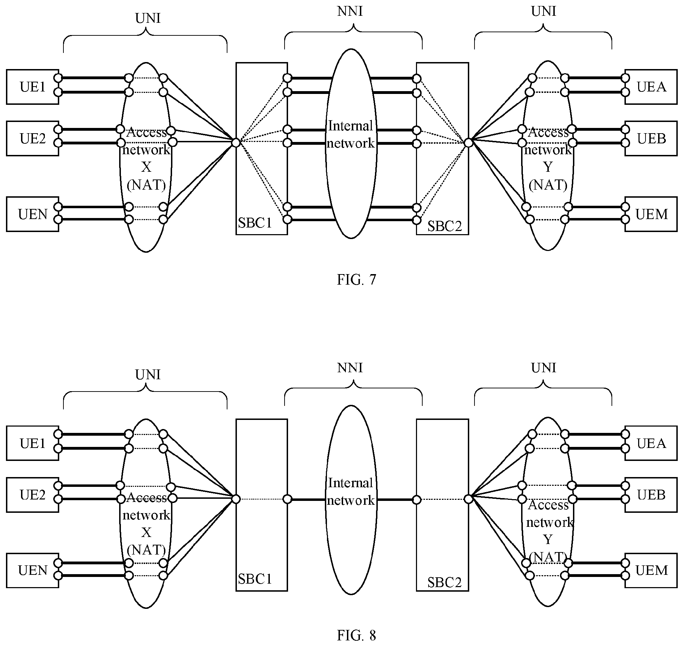

When IP addresses at the network side of the SBC are sufficient, a separate IP+Port combination is used to correspond to the real-time media stream (refer to Table 2 and FIG.7). When IP addresses at the network side of the SBC are insufficient, a plurality of media streams may share one network side IP+Port combination (refer to Table 3 and FIG.8).

**Table 2**

| Terminal identifier | Media stream identifier at terminal side | IP address at user side of SBC | Port number at terminal side | IP address at network side of SBC | Port number at network side of SBC |
|---|---|---|---|---|---|
| A | 13248 | 192.128.1.1 | 10000 | 10.40.5.1 | 10000 |
| | 13249 | 192.128.1.1 | 10000 | 10.40.5.1 | 10002 |
| B | 22128 | 192.128.1.1 | 10000 | 10.40.5.1 | 10004 |
| | 22129 | 192.128.1.1 | 10000 | 10.40.5.1 | 10006 |
| C | 30000 | 192.128.1.1 | 10000 | 10.40.5.1 | 10008 |
| | 30002 | 192.128.1.1 | 10000 | 10.40.5.1 | 10010 |

In Table 2, user plane ports at the SBC side allow media streams of a plurality of terminals to share the same user plane port at the SBC side, and one user plane port is allocated to each media stream of each terminal on the network side for mapping.

**Table 3**

| Terminal identifier | Media stream identifier at terminal side | IP address at user side of SBC | Port number at terminal side | IP address at network side of SBC | Port number at network side of SBC |
|---|---|---|---|---|---|
| A | 13248 | 192.128.1.1 | 10000 | 10.40.5.1 | 10000 |
| | 13249 | 192.128.1.1 | 10000 | 10.40.5.1 | 10000 |
| B | 22128 | 192.128.1.1 | 10000 | 10.40.5.1 | 10000 |
| | 22129 | 192.128.1.1 | 10000 | 10.40.5.1 | 10000 |
| C | 30000 | 192.128.1.1 | 10000 | 10.40.5.1 | 10000 |
| | 30002 | 192.128.1.1 | 10000 | 10.40.5.1 | 10000 |

In Table 3, user plane ports at the SBC side allow media streams of a plurality of terminals to share the same user plane port at the SBC side, and one user plane port is allocated to each media stream of each terminal on the network side for mapping.

In 404, the calling CSCF forwards the service request to the called side SBC according to an IMS basic call process.

In 405, the called side SBC extracts the real-time media stream identifier, and allocates the local port to be associated with the real-time media stream identifier. A plurality of real-time media streams may share one local port.

In an embodiment, the SBC considers a total bandwidth corresponding to all the media streams when establishing a correspondence between one local port and the plurality of real-time media streams, to ensure that a traffic of a UDP port does not exceed a traffic range of a physical port.

In 406, the called side SBC forwards the service request to the called terminal.

In 407, the called terminal parses media information in the service request, and records the correspondence between the media stream identifier and the IP+Port of the media stream.

In 408, the called terminal carries the media stream identifier in the service response when sending the service response.

In 409, the called side SBC inserts the real-time media stream identifier into the service response when receiving the response from the called terminal.

In an embodiment, if the called terminal carries the real-time media stream identifier in the response, the SBC compares real-time media stream identifier with the content locally recorded to determine whether they are consistent. If the real-time media stream identifier carried in the response is inconsistent with the content locally recorded, the real-time media stream identifier carried in the response is replaced with the content locally recorded.

In 410, the called side SBC routes the response to the calling side SBC according to the call process of the standard IMS.

In 411, the calling side SBC parses the information in the service response, determines whether the response carries a unique real-time media stream identifier, and if not, inserts in the service response a real-time media stream identifier corresponding to the local end carried in the request. If the service response has already carried the unique real-time media stream identifier, the unique real-time media stream identifier is compared with the real-time media stream identifier in the request to determine whether they are consistent, and if not, the unique real-time media stream identifier in the request is replaced with the real-time media stream identifier in the request. The SBC modifies address information of the real-time media stream in the response to the IP+Port corresponding to the local end.

In 412, the calling terminal extracts the real-time media stream identifier and the IP+Port of the SBC after receiving the response forwarded by the calling side SBC.

Both the calling terminal and the called terminal have established the correspondence between the real-time media stream identifier and the IP+Port of a receiving end at the user side (i.e., a user network interface (UNI)) of the SBC.

In 413, the calling or called terminal sends the real-time media stream to the IP+Port of the SBC, and carries the real-time media stream identifier in the real-time media stream.

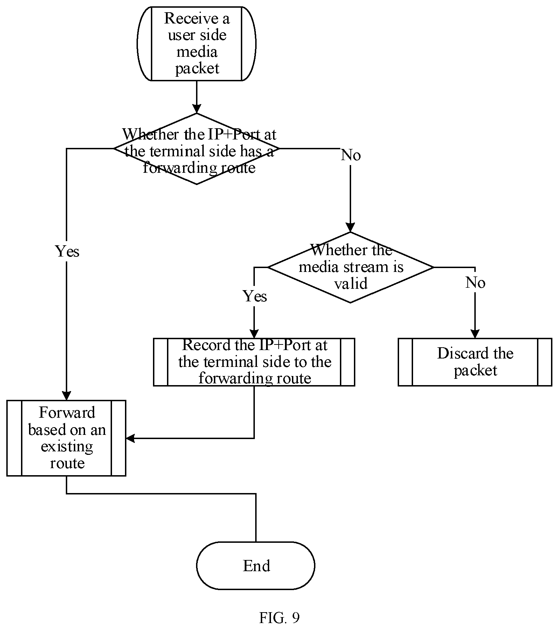

In 414, the SBC first checks whether the source IP+Port has a corresponding forwarding route when receiving the real-time media stream, i.e., the real-time media stream can be forwarded to a destination IP+Port to be forwarded according to the source IP+Port. If the destination IP+Port to be forwarded is found, the real-time media stream is directly forwarded. If the destination IP+Port to be forwarded is not found, the SBC checks and analyzes the real-time media stream identifier in the media packet, and queries whether the real-time media stream identifier is included in real-time media stream identifiers corresponding to the local port of the SBC. If the real-time media stream identifier is included in the real-time media stream identifiers corresponding to the local port of the SBC, it indicates that the real-time media stream is valid, the source IP+Port of the terminal is recorded in the forwarding route, and subsequent real-time media streams sent by the IP+Port can be directly forwarded, so that the real-time media stream identifier does not need to be determined, thereby improving the processing efficiency. If the real-time media stream identifier is included in a list of the real-time media stream identifiers corresponding to the local port, it indicates that the real-time media stream is invalid and is directly discarded, as shown in FIG. 9.

The IP+Port corresponding to the terminal may be recorded in a blacklist, and subsequent packets received from the IP+Port may be directly discarded.

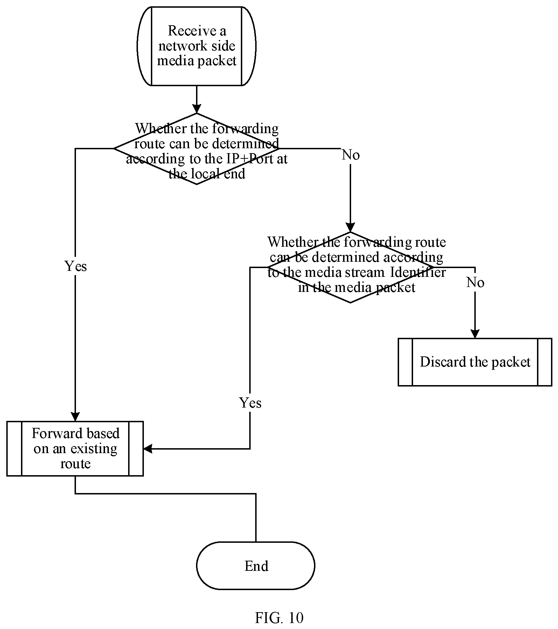

In 415, the SBC forwards the real-time media stream to a peer SBC. When the peer SBC receives the media stream sent by the network side, the SBC determines whether the local end has a unique forwarding relationship according to the IP+Port at the local. If the local end allocates a separate port for each real-time media stream, the local end may determine the forwarding relationship, and the peer SBC directly forwards the media stream according to a routing relationship corresponding to the forwarding relationship. If an IP+Port of a receiving end at the network side (i.e., a network node interface (NNI)) corresponds to a plurality of real-time media streams, a target port of a corresponding UNI is determined for forwarding by analyzing the unique media stream identifier in the real-time media streams. If a forwarding route cannot be determined based on the media stream identifier in the media stream, the packet is dropped directly, as shown in FIG. 10.

In this way, SBC realizes the receiving and forwarding of real-time media streams.

In the embodiments of the present disclosure, media stream identifier negotiation and authentication are added, and functions such as secure access of media streams and anti-malicious attacks are provided. In addition, the utilization rate of the user side IP+Port is greatly improved, and the demand for the IP addresses is reduced.

Some of application examples are described below.

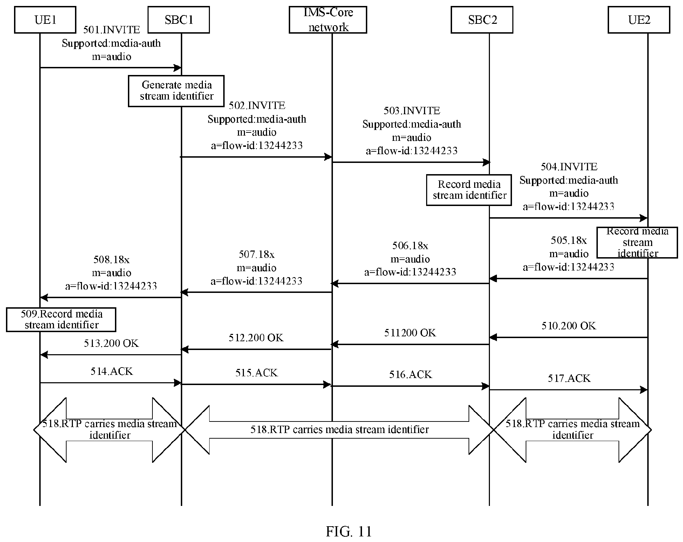

Referring to FIG. 11, an application example of a call process in an IMS network is shown, a method performed in the IMS network is described taking session initiation protocol (SIP) as an example, which includes the following operations.

In 501, a terminal UE1 initiates a service request to SBC1, and carries a media authentication capability 'Supported: media-auth, m=audio' in the INVITE (invitation) request.

In 502, the SBC1 generates a unique identifier for each media stream to authenticate the media. The SBC1 carries the media stream identifier when forwarding the service request to the next hop.

In 503, the IMS routes the service request to the SBC2 where the called terminal is located, and the request includes the media stream identifier.

In 504, the SBC2 records the media stream identifier, and carries the media stream identifier in the request forwarded to the terminal UE2. If the called terminal is required to forcibly support the media authentication, a header 'Require: media-auth' of a capability of requiring the terminal to support the media authentication is carried in the request. If the called terminal is not required to forcibly support the media authentication, a header 'Supported: media-auth' of a capability of the local end supporting the media authentication is carried in the request.

In 505, the UE2 carries the media stream identifier in a returned 18x response (a general term for a temporary response such as 180 or 183), which indicates that the local end accepts the media stream identifier corresponding to the media stream, and carries a capability flag 'Supported: media-auth' of supporting the media authentication.

In 506, the SBC2 carries the media stream identifier in the forwarded 18x response.

In 507, the IMS carries the media stream identifier in the 18x response forwarded to the SBC1.

In 508, the SBC1 carries the media stream identifier in the 18x response forwarded to the terminal.

In 509, the calling terminal UE1 records the authentication identifier of each medium stream in the 18x response.

In 510, the UE2 returns 200 OK (a response) to the SBC2 after the user responds.

In 511, the SBC2 forwards the 200 OK response to the IMS.

In 512, the IMS forwards the 200 OK response to the SBC1.

In 513, the SBC1 forwards the 200 OK response to the terminal UE1.

In 514, the calling terminal UE1 sends an acknowledgement request (ACK) to the SBC1, which indicates establishment of the session.

In515, the SBC1 forwards the ACK request to the IMS.

In 516, the IMS forwards the ACK request to the SBC2.

In 517, the SBC2 forwards the ACK request to the UE2.

In 518, RTP media streams sent by the UE1 and the UE2 carry the media stream identifier.

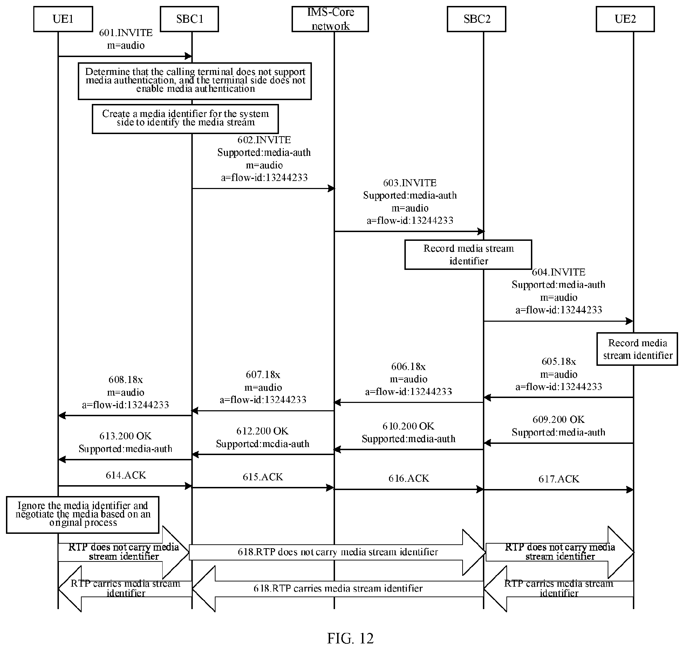

Referring to FIG. 12, an application example of SBC signaling negotiation process in the IMS network is shown, in which a caller does not support media stream identifier negotiation and a callee supports the media stream identifier negotiation, including the following operations.

In 601, the terminal UE1 initiates a service request to the SBC1, and does not carry the media authentication capability in the INVITE request, which indicates that the local end does not support media authentication.

In 602, the SBC1 generates a unique identifier for each media stream to authenticate the media. The SBC1 carries the media stream identifier when forwarding the service request to the next hop.

In 603, the IMS routes the service request to the SBC2 where the called terminal is located, and the request includes the media stream identifier.

In 604, the SBC2 records the media stream identifier, and carries the media stream identifier in the request forwarded to the terminal UE2. If the called terminal is required to forcibly support media authentication, a header 'Require: media-auth' of a capability of requiring the terminal to support the media authentication is carried in the request. If the called terminal is not required to forcibly support the media authentication, a header 'Supported: media-auth' of a capability of the local end supporting the media authentication is carried in the request. In this example, the called terminal is not required to forcibly support the media authentication.

In 605, the UE2 carries the media stream identifier in the returned 18x response, which indicates that the local end accepts the media stream identifier corresponding to the media stream, and carries the capability flag 'Supported: media-auth' of supporting the media authentication.

In 606, the SBC2 carries the media stream identifier in the forwarded 18x response.

In 607, the IMS carries the media stream identifier in the 18x response forwarded to the SBC1.

In 608, the SBC1 carries the media stream identifier in the 18x response forwarded to the terminal.

In 609, the calling terminal UE1 ignores the media stream identifier in the 18x response, does not insert the media stream identifier in the media stream, and performs media negotiation based on a media authentication-free mode.

In 610, the UE2 returns a 200 OK response to the SBC2 after the user responds.

In 611, the SBC2 forwards the 200 OK response to the IMS.

In 612, the IMS forwards the 200 OK response to the SBC1.

In 613, the SBC1 forwards the 200 OK response to the terminal UE1.

In 614, the calling terminal UE1 sends the ACK to the SBC1, which indicates the establishment of the session.

In 615, the SBC1 forwards the ACK request to the IMS.

In 616, the IMS forwards the ACK request to the SBC2.

In 617, the SBC2 forwards the ACK request to the UE2.

In 618, the RTP media stream sent by the UE1 does not carry the media stream identifier, and the RTP media stream sent by the UE2 carries the media stream identifier.

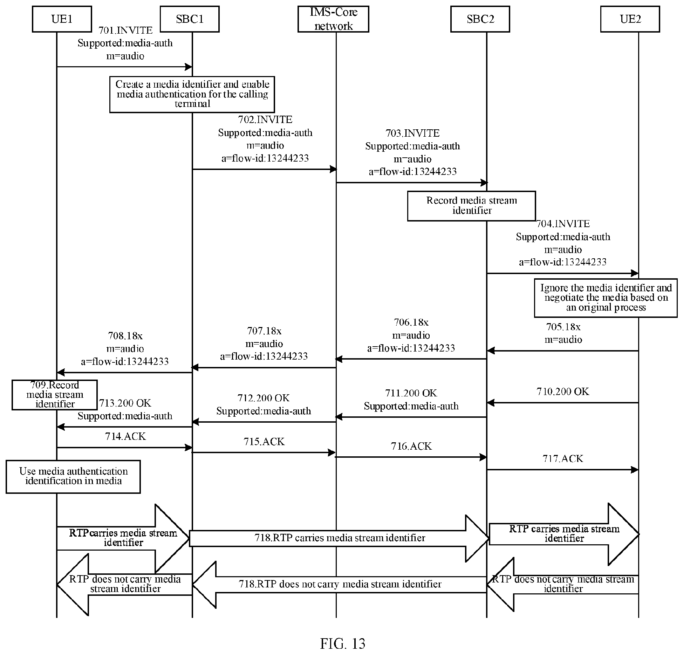

Referring to FIG. 13, an application example of SBC signaling negotiation process in the IMS network is shown, in which the caller supports media stream identifier negotiation and the callee does not support media stream identifier negotiation, including the following operations.

In 701, the terminal UE1 initiates a service request to the SBC1, and carries the media authentication capability in the INVITE request, which indicates that the local end supports the media authentication.

In 702, the SBC1 generates a unique identifier for each media stream to authenticate the media. The SBC1 carries the media stream identifier when forwarding the service request to the next hop;

In 703, the IMS routes the service request to the SBC2 where the called terminal is located, and the request includes the media stream identifier.

In 704, the SBC2 records the media stream identifier, and carries the media stream identifier in the request forwarded to the terminal UE2. If the called terminal is required to forcibly support media authentication, a header 'Require: media-auth' of a capability of requiring the terminal to support the media authentication is carried in the request. If the called terminal is not required to forcibly support the media authentication, a header 'Supported: media-auth' of a capability of the local end supporting the media authentication is carried in the request. In this example, the called terminal is not required to forcibly support the media authentication.

In 705, the UE2 does not carry the media stream identifier and the capability flag 'Supported: media-auth' of supporting the media authentication in the returned 18x response, which indicates that the local end does not support the media authentication.

In 706, the SBC2 does not carry the media stream identifier in the forwarded 18x response.

In 707, the IMS does not carry the media stream identifier in the 18x response forwarded to the SBC1.

In 708, the SBC1 inserts previously generated media stream identifier into the 18x response forwarded to the terminal.

In 709, the calling terminal UE1 stores the media stream identifier, inserts the media stream identifier into the media stream, and performs media negotiation based on a media authentication mode.

In 710, the UE2 returns a 200 OK response to the SBC2 after the user responds.

In 711, the SBC2 forwards the 200 OK response to the IMS.

In 712, the IMS forwards the 200 OK response to the SBC1.

In 713, the SBC1 forwards the 200 OK response to the terminal UE1.

In 714, the calling terminal UE1 sends the ACK to the SBC1, which indicates the establishment of the session.

In 715, the SBC1 forwards the ACK request to the IMS.

In 716, the IMS forwards the ACK request to the SBC2.

In 717, the SBC2 forwards the ACK request to the UE2.

In 718, the RTP media stream sent by the UE1 does not carry the media stream identifier, and the RTP media stream sent by the UE2 does not carry the media stream identifier.

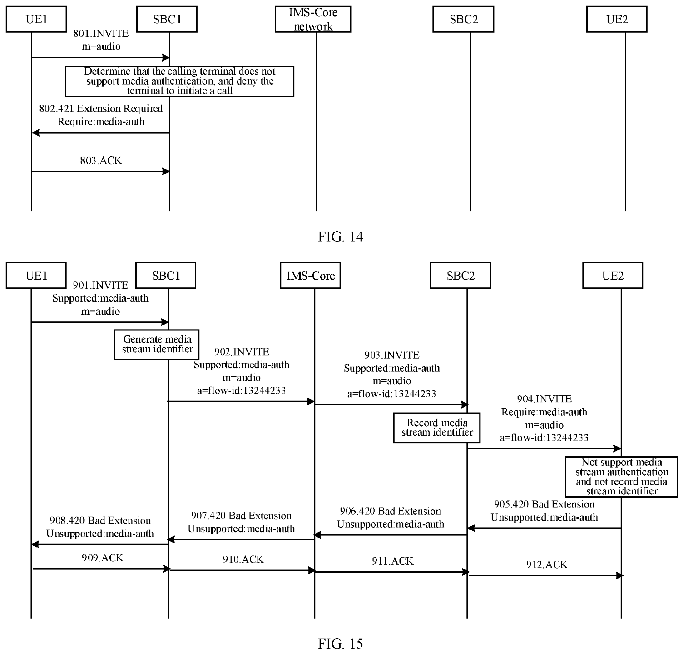

Referring to FIG. 14, an application example of SBC signaling negotiation process in the IMS network is shown, in which the caller does not support media stream identifier negotiation, and the calling side SBC directly denies, including the following operations.

In 801, the terminal UE1 initiates a service request to the SBC1, and does not carry the media authentication capability in the INVITE request, which indicates that the local end does not support media authentication.

In 802, the SBC1 determines that media authentication needs to be performed this time, but the calling terminal does not support the media authentication, so a '421 Extension Required' failure response is returned which indicates that the terminal is required to support the media authentication.

In 803, the terminal UE1 sends the ACK to end this session.

Referring to FIG. 15, an application example of SBC signaling negotiation process in the IMS network is shown, in which the callee does not support media stream identifier negotiation, and the called SBC directly denies, including the following operations.

In 901, the terminal UE1 initiates a service request to the SBC1, and carries the media authentication capability in the INVITE request, which indicates that the local end supports the media authentication.

In 902, the SBC1 generates a unique identifier for each media stream to authenticate the media. The SBC1 carries the media stream identifier when forwarding the service request to the next hop.

In 903, the IMS routes the service request to the SBC2 where the called terminal is located, and the request includes the media stream identifier.

In 904, the SBC2 records the media stream identifier, and carries the media stream identifier in the request forwarded to the terminal UE2. The called terminal is required to forcibly support media authentication, and the request carries a header 'Require: media-auth' of a capability of requiring the terminal to support the media authentication.

In 905, the UE2 finds that the local end does not support the media authentication, and returns a '420 Bad Extension' failure response which indicates that the local end does not support the media authentication capability 'Supported: media-auth'.

In 906, the SBC2 forwards the 420 response to the IMS.

In 907, the IMS forwards the 420 response to the SBC1.

In 908, the SBC1 forwards the 420 response to the terminal 420.

In 909, the calling terminal UE1 sends the ACK to the SBC1, which indicates the establishment of the session.

In 910, the SBC1 forwards the ACK request to the IMS.

In 911, the IMS forwards the ACK request to the SBC2.

In 912, the SBC2 forwards the ACK request to the UE2.

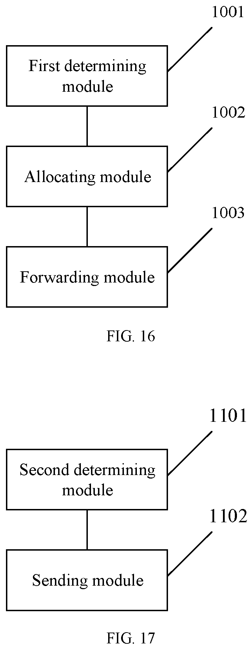

As shown in FIG. 16, an embodiment of the present disclosure further provides an apparatus for real-time media stream access applied to a communication device, which includes: a first determining module 1001, configured to determine a media stream identifier corresponding to a real-time media stream in a process of establishing a real-time media stream session; an allocating module 1002, configured to allocate a local port for the real-time media stream, where each local port corresponds to one or more real-time media streams; and a forwarding module 1003, configured to forward a media packet carrying the real-time media stream after the real-time media stream session is established, where the media packet carries the media stream identifier.

As shown in FIG. 17, an embodiment of the present disclosure further provides an apparatus for real-time media stream access applied to a terminal, which includes: a second determining module 1101, configured to determine a media stream identifier corresponding to a real-time media stream in a process of establishing a real-time media stream session; and a sending module 1102, configured to send a media packet carrying the real-time media stream after the real-time media stream session is established, where the media packet carries the media stream identifier.

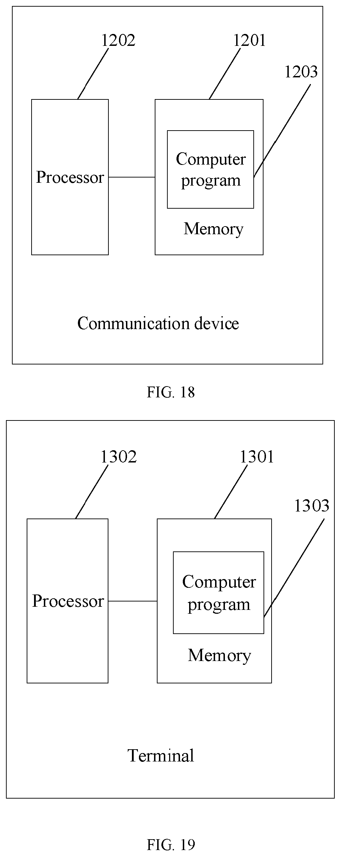

As shown in FIG. 18, an embodiment of the present disclosure further provides a communication device including a memory 1201, a processor 1202, and a computer program 1203 stored on the memory 1201 and executable by the processor 1202. The processor 1202 executes the computer program 1203 to perform the method for real-time media stream access as shown in FIG. 4.

As shown in FIG. 19, an embodiment of the present disclosure further provides a terminal including a memory 1301, a processor 1302, and a computer program 1303 stored on the memory 1301 and executable by the processor 1302. The processor 1302 executes the computer program 1303 to perform the method for real-time media stream access as shown in FIG. 5.

An embodiment of the present disclosure further provides a computer readable storage medium storing a computer executable instruction. The computer executable instruction is configured to perform the method for real-time media stream access.

In this embodiment, the storage medium may include, but is not limited to, a USB flash drive, a read-only memory (ROM), a random access memory (RAM), a removable hard disk, a magnetic disk, an optical disc, or any other medium that can store program codes.

Those of ordinary skill in the art should appreciate that all or some of the operations, systems, functional modules/units in the apparatus may be implemented as software, firmware, hardware, and appropriate combinations thereof. In a hardware implementation, the division of functional modules/units mentioned in the above description does not necessarily correspond to division of physical components. For example, a physical component may have multiple functions, or a function or operation may be performed by several physical components in cooperation. Some or all components may be implemented as software executed by a processor, such as a digital signal processor or a microprocessor, or as hardware, or as an integrated circuit, such as an application-specific integrated circuit. Such software may be distributed over a computer readable medium, which may include a computer storage medium (or non-transitory medium) and communication medium (or transitory medium). As known to those of ordinary skill in the art, the term computer storage medium includes volatile and non-volatile, removable and non-removable media implemented in any method or technique for storing information, such as computer readable instructions, data structures, program modules or other data. The computer storage medium includes, but is not limited to, a RAM, ROM, EEPROM, flash memory or other memory technologies, CD-ROM, digital versatile disk (DVD) or other optical disk storage, magnetic cassette, magnetic tape, magnetic disk storage or other magnetic storage device, or any other medium that may be configured to store desired information and that may be accessed by a computer. Furthermore, as is well known to those of ordinary skill in the art, a communication medium typically includes computer readable instructions, data structures, program modules, or other data in a modulated data signal such as a carrier wave or other transmission mechanism, and may include any information delivery medium.

## Claims

1. A method for real-time media stream access, **characterized by** comprising:
determining (201), by a communication device, a media stream identifier corresponding to a real-time media stream in a process of establishing a real-time media stream session;
allocating (202), by the communication device, a local port for the real-time media stream, wherein each local port corresponds to one or more real-time media streams; and
forwarding (203), by the communication device, a media packet carrying the real-time media stream after the real-time media stream session is established, wherein the media packet carries the media stream identifier, wherein the communication device comprises a calling side session border controller, SBC, and determining, by the communication device, the media stream identifier corresponding to the real-time media stream in the process of establishing the real-time media stream session comprises:
receiving, by the communication device, a service request sent by a calling terminal for the real-time media stream, wherein the service request carries a capability of supporting media stream authentication; and
allocating, by the communication device, a globally unique identifier as the media stream identifier corresponding to the real-time media stream;
or
receiving, by the communication device, a service request sent by a calling terminal for the real-time media stream, wherein the service request carries a capability of supporting media stream authentication and a media stream identifier allocated by the calling terminal; and
in response to determining that the media stream identifier allocated by the calling terminal is not occupied, determining, by the communication device, the media stream identifier allocated by the calling terminal as the media stream identifier corresponding to the real-time media stream;
or
receiving, by the communication device, a service request sent by a calling terminal for the real-time media stream, wherein the service request carries a capability of supporting media stream authentication and a media stream identifier allocated by the calling terminal;
in response to determining that the media stream identifier allocated by the calling terminal is occupied, allocating, by the communication device, a globally unique identifier as the media stream identifier corresponding to the real-time media stream; and
notifying, by the communication device, the calling terminal of the media stream identifier corresponding to the real-time media stream.

2. The method according to claim 1, wherein the communication device comprises a calling side session border controller SBC, and the method further comprises:
receiving, by the communication device, a service request sent by a calling terminal for the real-time media stream, wherein the service request does not carry a capability of supporting media stream authentication; and
denying, by the communication device, access of the calling terminal.

3. The method according to claim 1, wherein the communication device comprises a called side session border controller SBC, and determining, by the communication device, the media stream identifier corresponding to the real-time media stream in the process of establishing the real-time media stream session comprises:
receiving, by the communication device, a service request sent by a calling side SBC for the real-time media stream, and obtaining, by the communication device, the media stream identifier from the service request.

4. The method according to claim 3, further comprising:
receiving, by the communication device, a response sent by a called terminal for the service request, wherein the service request does not carry a capability of supporting media stream authentication; and
denying, by the communication device, access of the called terminal.

5. The method according to claim 1 or 3, further comprising:
receiving, by the communication device, a response for the service request;
determining, by the communication device, that the response does not carry the media stream identifier;
adding, by the communication device, the media stream identifier corresponding to the real-time media stream to the response; and
forwarding, by the communication device, the response carrying the media stream identifier.

6. The method according to claim 1 or 3, further comprising:
receiving, by the communication device, a response for the service request;
determining, by the communication device, that the response carries the media stream identifier;
comparing, by the communication device, the media stream identifier carried in the response with the media stream identifier corresponding to the real-time media stream to determine whether the media stream identifier carried in the response is consistent with the media stream identifier corresponding to the real-time media stream; and
in response to determining that the media stream identifier carried in the response is inconsistent with the media stream identifier corresponding to the real-time media stream, replacing, by the communication device, the media stream identifier carried in the response with the media stream identifier corresponding to the real-time media stream, and forwarding, by the communication device, the response.

7. The method according to claim 1, further comprising:
performing, by the communication device, media stream validity judgment by checking the media stream identifier carried in the media packet.

8. The method according to claim 7, wherein performing, by the communication device, media stream validity judgment by checking the media stream identifier carried in the media packet comprises:
determining, by the communication device, that the real-time media stream is valid in response to
determining that the media stream identifier carried in the media packet is included in one or more media stream identifiers corresponding to the local port; and
determining, by the communication device, that the real-time media stream is invalid in response to determining that the media stream identifier carried in the media packet is not included in the one or more media stream identifiers corresponding to the local port.

9. The method according to claim 7, wherein before the communication device performs the media stream validity judgment, the method further comprises:
determining, by the communication device, that no corresponding forwarding route is included in source address information in the media packet;
wherein the source address information comprises a combination of a source IP address and a port number.

10. The method according to claim 7, wherein after the communication device performs the media stream validity judgment, the method further comprises:
recording, by the communication device, a forwarding route corresponding to source address information in the media packet in response to determining that the real-time media stream is valid, and forwarding, by the communication device, subsequent media packets carrying the real-time media stream directly after receiving the subsequent media packets; and
discarding, by the communication device, the media packet carrying the real-time media stream in response to determining that the real-time media stream is invalid;
optionally, wherein after the communication device performs the media stream validity judgment, the method further comprises:
recording, by the communication device, source address information in the media packet carrying the real-time media stream as a blacklist in response to determining that the real-time media stream is invalid, and discarding, by the communication device, subsequent media packets carrying the source address information after receiving the subsequent media packets.

11. A method for real-time media stream access, **characterized by** comprising:
determining (301), by a terminal, a media stream identifier corresponding to a real-time media stream in a process of establishing a real-time media stream session; and
sending (302), by the terminal, a media packet carrying the real-time media stream after the real-time media stream session is established, wherein the media packet carries the media stream identifier, wherein
the terminal comprises a calling terminal, and determining (301), by the terminal, the media stream identifier corresponding to the real-time media stream in the process of establishing the real-time media stream session, comprises:
sending, by the terminal, a service request for the real-time media stream, wherein the service request carries a capability of supporting media stream authentication, and
receiving a response for the service request, wherein the response carries a media stream identifier which is a globally unique identifier allocated by a communication device;
or
sending, by the terminal, a service request for the real-time media stream, wherein the service request carries a capability of supporting media stream authentication and a media stream identifier allocated by the terminal,
receiving, by the terminal, a response for the service request; and
determining, by the terminal, a media stream identifier carried in the response as a media stream identifier corresponding to the real-time media stream, wherein the media stream identifier carried in the response is the media stream identifier allocated by the terminal if the media stream identifier allocated by the terminal is not occupied, and the media stream identifier carried in the response is a globally unique identifier allocated by the communication device if the media stream identifier allocated by the terminal is occupied.

12. A communication device, **characterized by** comprising: a memory (1201), a processor (1202), and a computer program (1203) stored on the memory (1201) and executable by the processor (1202), wherein the processor (1202) executes the computer program (1203) to perform the method for real-time media stream access according to any one of claims 1 to 10.

13. A terminal, **characterized by** comprising: a memory (1301), a processor (1302), and a computer program (1303) stored on the memory (1301) and executable by the processor (1302), wherein the processor (1302) executes the computer program (1303) to perform the method for real-time media stream access according to claim 11.

14. A computer readable storage medium, **characterized by** storing a computer executable instruction, wherein the computer executable instruction is configured to perform the method for real-time media stream access according to any one of claims 1 to 11.

## Patentansprüche

1. Ein Verfahren für Echtzeit-Medienstromzugriff, **dadurch gekennzeichnet, dass** es Folgendes umfasst:
Bestimmen (201) durch eine Kommunikationsvorrichtung einer Medienstromkennung, die einem Echtzeit-Medienstrom entspricht, in einem Prozess zum Aufbauen einer Echtzeit-Medienstromsitzung;
Zuordnen (202) durch die Kommunikationsvorrichtung eines lokalen Ports für den Echtzeit-Medienstrom, wobei jeder lokale Port einem oder mehreren Echtzeit-Medienströmen entspricht; und
Weiterleiten (203) durch die Kommunikationsvorrichtung eines Medienpakets, das den Echtzeit-Medienstrom trägt, nachdem die Echtzeit-Medienstromsitzung aufgebaut ist, wobei das Medienpaket die Medienstromkennung trägt, wobei die Kommunikationsvorrichtung einen Session Border Controller, SBC, auf der anrufenden Seite umfasst, und Bestimmen der Medienstromkennung, die dem Echtzeit-Medienstrom entspricht, durch die Kommunikationsvorrichtung in dem Prozess des Aufbaus der Echtzeit-Medienstromsitzung Folgendes umfasst:
Empfangen durch die Kommunikationsvorrichtung einer von einem anrufenden Endgerät gesendeten Dienstanforderung für den Echtzeit-Medienstrom, wobei die Dienstanforderung eine Fähigkeit zum Unterstützen der Medienstromauthentifizierung trägt; und
Zuordnen durch die Kommunikationsvorrichtung einer global eindeutigen Kennung als die Medienstromkennung, die dem Echtzeit-Medienstrom entspricht;
oder
Empfangen durch die Kommunikationsvorrichtung einer von einem anrufenden Endgerät gesendeten Dienstanforderung für den Echtzeit-Medienstrom, wobei die Dienstanforderung eine Fähigkeit zum Unterstützen der Medienstromauthentifizierung und eine von dem anrufenden Endgerät zugeordnete Medienstromkennung trägt; und
als Reaktion auf das Bestimmen, dass die von dem anrufenden Endgerät zugeordnete Medienstromkennung nicht belegt ist, Bestimmen durch die Kommunikationsvorrichtung der von dem anrufenden Endgerät zugeordneten Medienstromkennung als die dem Echtzeit-Medienstrom entsprechende Medienstromkennung;
oder
Empfangen durch die Kommunikationsvorrichtung einer von einem anrufenden Endgerät gesendeten Dienstanforderung für den Echtzeit-Medienstrom, wobei die Dienstanforderung eine Fähigkeit zum Unterstützen der Medienstromauthentifizierung und eine von dem anrufenden Endgerät zugeordnete Medienstromkennung trägt;
als Reaktion auf das Bestimmen, dass die von dem anrufenden Endgerät zugeordnete Medienstromkennung belegt ist, Zuordnen durch die Kommunikationsvorrichtung einer global eindeutigen Kennung als Medienstromkennung, die dem Echtzeit-Medienstrom entspricht; und
Benachrichtigen durch die Kommunikationsvorrichtung des anrufenden Endgeräts über die Medienstromkennung, die dem Echtzeit-Medienstrom entspricht.

2. Das Verfahren nach Anspruch 1, wobei die Kommunikationsvorrichtung einen Session Border Controller SBC auf der anrufenden Seite umfasst, und das Verfahren weiter umfasst:
Empfangen durch die Kommunikationsvorrichtung einer von einem anrufenden Endgerät gesendeten Dienstanforderung für den Echtzeit-Medienstrom, wobei die Dienstanforderung keine Fähigkeit zum Unterstützen der Medienstromauthentifizierung trägt; und
Verweigern durch die Kommunikationsvorrichtung des Zugriffs des anrufenden Endgeräts.

3. Das Verfahren nach Anspruch 1, wobei die Kommunikationsvorrichtung einen Session Border Controller SBC auf der angerufenen Seite umfasst, und das Bestimmen durch die Kommunikationsvorrichtung der Medienstromkennung, die dem Echtzeit-Medienstrom entspricht, in dem Prozess des Aufbaus der Echtzeit-Medienstromsitzung Folgendes umfasst:
Empfangen durch die Kommunikationsvorrichtung einer von einem SBC auf der anrufenden Seite gesendeten Dienstanforderung für den Echtzeit-Medienstrom und Erhalten durch die Kommunikationsvorrichtung der Medienstromkennung aus der Dienstanforderung.

4. Das Verfahren nach Anspruch 3, weiter umfassend:
Empfangen durch die Kommunikationsvorrichtung einer von einem angerufenen Endgerät gesendeten Antwort auf die Dienstanforderung, wobei die Dienstanforderung keine Fähigkeit zum Unterstützen der Medienstromauthentifizierung trägt; und
Verweigern durch die Kommunikationsvorrichtung des Zugriffs des angerufenen Endgeräts.

5. Das Verfahren nach Anspruch 1 oder 3, weiter umfassend:
Empfangen durch die Kommunikationsvorrichtung einer Antwort auf die Dienstanforderung;
Bestimmen durch die Kommunikationsvorrichtung, dass die Antwort keine Medienstromkennung trägt;
Hinzufügen zur Antwort durch die Kommunikationsvorrichtung der Medienstromkennung, die dem Echtzeit-Medienstrom entspricht; und
Weiterleiten durch die Kommunikationsvorrichtung der Antwort, die die Medienstromkennung trägt.

6. Das Verfahren nach Anspruch 1 oder 3, weiter umfassend:
Empfangen durch die Kommunikationsvorrichtung einer Antwort auf die Dienstanforderung;
Bestimmen durch die Kommunikationsvorrichtung, dass die Antwort die Medienstromkennung trägt;
Vergleichen durch die Kommunikationsvorrichtung der Medienstromkennung, die in der Antwort getragen wird, mit der Medienstromkennung, die dem Echtzeit-Medienstrom entspricht, um zu bestimmen, ob die Medienstromkennung, die in der Antwort getragen wird, mit der Medienstromkennung, die dem Echtzeit-Medienstrom entspricht, übereinstimmt; und
als Reaktion auf das Bestimmen, dass die Medienstromkennung, die in der Antwort getragen wird, nicht mit der Medienstromkennung, die dem Echtzeit-Medienstrom entspricht, übereinstimmt, Ersetzen durch die Kommunikationsvorrichtung der Medienstromkennung, die in der Antwort getragen wird, durch die Medienstromkennung, die dem Echtzeit-Medienstrom entspricht, und Weiterleiten der Antwort durch die Kommunikationsvorrichtung.

7. Das Verfahren nach Anspruch 1, weiter umfassend:
Durchführen durch die Kommunikationsvorrichtung einer Beurteilung der Gültigkeit des Medienstroms durch Überprüfen der Medienstromkennung, die in dem Medienpaket getragen wird.

8. Das Verfahren nach Anspruch 7, wobei das Durchführen durch die Kommunikationsvorrichtung einer Beurteilung der Gültigkeit des Medienstroms durch Überprüfen der Medienstromkennung, die in dem Medienpaket getragen wird, Folgendes umfasst:
Bestimmen durch die Kommunikationsvorrichtung, dass der Echtzeit-Medienstrom gültig ist, als Reaktion auf
Bestimmen, dass die Medienstromkennung, die in dem Medienpaket getragen wird, in einer oder mehreren Medienstromkennungen beinhaltet ist, die dem lokalen Port entsprechen; und
Bestimmen, durch die Kommunikationsvorrichtung, dass der Echtzeit-Medienstrom ungültig ist, als Reaktion auf Bestimmen, dass die Medienstromkennung, die in dem Medienpaket getragen wird, nicht in den einem oder mehreren Medienstromkennungen, die dem lokalen Port entsprechen, beinhaltet ist.

9. Das Verfahren nach Anspruch 7, wobei das Verfahren, bevor die Kommunikationsvorrichtung die Beurteilung der Gültigkeit des Medienstroms durchführt, weiter Folgendes umfasst:
Bestimmen durch die Kommunikationsvorrichtung, dass in den Quelladressinformationen in dem Medienpaket keine entsprechende Weiterleitungsroute beinhaltet ist;
wobei die Quelladressinformationen eine Kombination aus einer Quell-IP-Adresse und einer Port-Nummer umfassen.

10. Das Verfahren nach Anspruch 7, wobei das Verfahren, nachdem die Kommunikationsvorrichtung die Beurteilung der Gültigkeit des Medienstroms durchgeführt hat, weiter Folgendes umfasst:
Aufzeichnen durch die Kommunikationsvorrichtung einer Weiterleitungsroute, die Quelladressinformationen in dem Medienpaket entspricht, als Reaktion auf das Bestimmen, dass der Echtzeit-Medienstrom gültig ist, und Weiterleiten durch die Kommunikationsvorrichtung nachfolgender Medienpakete, die den Echtzeit-Medienstrom tragen, direkt nach dem Empfangen der nachfolgenden Medienpakete; und
Verwerfen durch die Kommunikationsvorrichtung des Medienpakets, das den Echtzeit-Medienstrom trägt, als Reaktion auf Bestimmen, dass der Echtzeit-Medienstrom ungültig ist;
wobei das Verfahren optional, nachdem die Kommunikationsvorrichtung die Beurteilung der Gültigkeit des Medienstroms durchgeführt hat, weiter umfasst:
Aufzeichnen durch die Kommunikationsvorrichtung von Quelladressinformationen in dem Medienpaket, das den Echtzeit-Medienstrom trägt, als Sperrliste als Reaktion auf das Bestimmen, dass der Echtzeit-Medienstrom ungültig ist, und Verwerfen durch die Kommunikationsvorrichtung nachfolgender Medienpakete, die die Quelladressinformationen tragen, nach dem Empfangen der nachfolgenden Medienpakete.

11. Ein Verfahren für Echtzeit-Medienstromzugriff, **dadurch gekennzeichnet, dass** es Folgendes umfasst:
Bestimmen (301) durch ein Endgerät einer Medienstromkennung, die einem Echtzeit-Medienstrom entspricht, in einem Prozess zum Aufbauen einer Echtzeit-Medienstromsitzung; und
Senden (302) durch das Endgerät eines Medienpakets, das den Echtzeit-Medienstrom trägt, nachdem die Echtzeit-Medienstromsitzung aufgebaut ist, wobei das Medienpaket die Medienstromkennung trägt, wobei
das Endgerät ein anrufendes Endgerät umfasst, und Bestimmen (301) durch das Endgerät der Medienstromkennung, die dem Echtzeit-Medienstrom entspricht, in dem Prozess des Aufbaus der Echtzeit-Medienstromsitzung Folgendes umfasst:
Senden einer Dienstanforderung für den Echtzeit-Medienstrom durch das Endgerät, wobei die Dienstanforderung die Fähigkeit zum Unterstützen der Medienstromauthentifizierung trägt, und
Empfangen einer Antwort auf die Dienstanforderung, wobei die Antwort eine Medienstromkennung trägt, die eine im Allgemeinen eindeutige Kennung ist, die von einer Kommunikationsvorrichtung zugeordnet wird;
oder
Senden einer Dienstanforderung für den Echtzeit-Medienstrom durch das Endgerät, wobei die Dienstanforderung die Fähigkeit zum Unterstützen der Medienstromauthentifizierung und eine Medienstromkennung trägt, die von dem Endgerät zugeordnet wird,
Empfangen durch das Endgerät einer Antwort auf die Dienstanforderung; und
Bestimmen durch das Endgerät einer Medienstromkennung, die in der Antwort getragen wird, als eine Medienstromkennung, die dem Echtzeit-Medienstrom entspricht, wobei die Medienstromkennung, die in der Antwort getragen wird, die Medienstromkennung ist, die von dem Endgerät zugeordnet wird, wenn die von dem Endgerät zugeordnete Medienstromkennung nicht belegt ist, und die Medienstromkennung, die in der Antwort getragen wird, eine im Allgemeinen eindeutige Kennung ist, die von der Kommunikationsvorrichtung zugeordnet wird, wenn die von dem Endgerät zugeordnete Medienstromkennung belegt ist.

12. Eine Kommunikationsvorrichtung, **dadurch gekennzeichnet, dass** sie umfasst: einen Speicher (1201), einen Prozessor (1202) und ein Computerprogramm (1203), das auf dem Speicher (1201) gespeichert ist und durch den Prozessor (1202) ausführbar ist, wobei der Prozessor (1202) das Computerprogramm (1203) ausführt, um das Verfahren für Echtzeit-Medienstromzugriff nach einem der Ansprüche 1 bis 10 durchzuführen.

13. Ein Endgerät, **dadurch gekennzeichnet, dass** es umfasst: einen Speicher (1301), einen Prozessor (1302) und ein Computerprogramm (1303), das auf dem Speicher (1301) gespeichert und durch den Prozessor (1302) ausführbar ist, wobei der Prozessor (1302) das Computerprogramm (1303) ausführt, um das Verfahren für Echtzeit-Medienstromzugriff nach Anspruch 11 durchzuführen.

14. Ein Computerlesbares Speichermedium, **gekennzeichnet durch** Speichern einer computerausführbaren Anweisung, wobei die computerausführbare Anweisung dazu konfiguriert ist, das Verfahren für Echtzeit-Medienstromzugriff nach einem der Ansprüche 1 bis 11 auszuführen.

## Revendications

1. Un procédé d'accès à un flux de médias en temps réel, **caractérisé en ce qu'**il comprend :
la détermination (201), par un dispositif de communication, d'un identifiant de flux de médias correspondant à un flux de médias en temps réel dans un processus d'établissement d'une session de flux de médias en temps réel ;
l'attribution (202), par le dispositif de communication, d'un port local pour le flux de médias en temps réel, dans lequel chaque port local correspond à un ou plusieurs flux de médias en temps réel ; et
la transmission (203), par le dispositif de communication, d'un paquet de médias comportant le flux de médias en temps réel après que la session de flux de médias en temps réel est été établie, dans lequel le paquet de médias transporte l'identifiant de flux de médias, dans lequel le dispositif de communication comprend un dispositif de commande de frontière de session, SBC, côté appelant, et la détermination, par le dispositif de communication, de l'identifiant de flux de médias correspondant au flux de médias en temps réel dans le processus d'établissement de la session de flux de médias en temps réel comprend :
la réception, par le dispositif de communication, d'une demande de service envoyée par un terminal appelant pour le flux de médias en temps réel, dans lequel la demande de service comporte une capacité de prise en charge d'une authentification de flux de médias ; et
l'attribution, par le dispositif de communication, d'un identifiant unique global en tant qu'identifiant de flux de médias correspondant au flux de médias en temps réel ;
ou
la réception, par le dispositif de communication, d'une demande de service envoyée par un terminal appelant pour le flux de médias en temps réel, dans lequel la demande de service comporte une capacité de prise en charge d'une authentification de flux de médias et un identifiant de flux de médias attribué par le terminal appelant ; et
à la suite de la détermination que l'identifiant de flux de médias attribué par le terminal appelant n'est pas occupé, la détermination, par le dispositif de communication, de l'identifiant de flux de médias attribué par le terminal appelant en tant qu'identifiant de flux de médias correspondant au flux de médias en temps réel ;
ou
la réception, par le dispositif de communication, d'une demande de service envoyée par un terminal appelant pour le flux de médias en temps réel, dans lequel la demande de service comporte une capacité de prise en charge d'une authentification de flux de médias et un identifiant de flux de médias attribué par le terminal appelant ;
à la suite de la détermination que l'identifiant de flux de médias attribué par le terminal appelant est occupé, l'attribution, par le dispositif de communication, d'un identifiant unique global en tant qu'identifiant de flux de médias correspondant au flux de médias en temps réel ; et
la notification, par le dispositif de communication, au terminal appelant de l'identifiant de flux de médias correspondant au flux de médias en temps réel.

2. Le procédé selon la revendication 1, dans lequel le dispositif de communication comprend un dispositif de commande de frontière de session, SBC, côté appelant et le procédé comprend en outre :
la réception, par le dispositif de communication, d'une demande de service envoyée par un terminal appelant pour le flux de médias en temps réel, dans lequel la demande de service ne comporte pas une capacité de prise en charge d'une authentification de flux de médias ; et
le refus, par le dispositif de communication, de l'accès du terminal appelant.

3. Le procédé selon la revendication 1, dans lequel le dispositif de communication comprend un dispositif de commande de frontière de session, SBC, côté appelé, et la détermination, par le dispositif de communication, de l'identifiant de flux de médias correspondant au flux de médias en temps réel dans le processus d'établissement de la session de flux de médias en temps réel comprend :
la réception, par le dispositif de communication, d'une demande de service envoyée par un SBC côté appelant pour le flux de médias en temps réel, et l'obtention, par le dispositif de communication, de l'identifiant de flux de médias à partir de la demande de service.

4. Le procédé selon la revendication 3, comprenant en outre :
la réception, par le dispositif de communication, d'une réponse envoyée par un terminal appelé pour la demande de service, dans lequel la demande de service ne comporte pas une capacité de prise en charge d'un authentification de flux de médias ; et
le refus, par le dispositif de communication, de l'accès du terminal appelé.

5. Le procédé selon la revendication 1 ou 3, comprenant en outre :
la réception, par le dispositif de communication, d'une réponse à la demande de service ;
la détermination, par le dispositif de communication, que la réponse ne comporte pas l'identifiant de flux de médias ;
l'ajout, par le dispositif de communication, de l'identifiant de flux de médias correspondant au flux de médias en temps réel à la réponse ; et
la transmission, par le dispositif de communication, de la réponse comportant l'identifiant de flux de médias.

6. Le procédé selon la revendication 1 ou 3, comprenant en outre :
la réception, par le dispositif de communication, d'une réponse à la demande de service ;
la détermination, par le dispositif de communication, que la réponse comporte l'identifiant de flux de médias ;
la comparaison, par le dispositif de communication, de l'identifiant de flux de médias contenu dans la réponse avec l'identifiant de flux de médias correspondant au flux de médias en temps réel pour déterminer si l'identifiant de flux de médias comporté dans la réponse est compatible avec l'identifiant de flux de médias correspondant au flux de médias en temps réel ; et
à la suite de la détermination que l'identifiant de flux de médias comporté dans la réponse est incompatible avec l'identifiant de flux de médias correspondant au flux de médias en temps réel, le remplacement, par le dispositif de communication, de l'identifiant de flux de médias comporté dans la réponse par l'identifiant de flux de médias correspondant au flux de médias en temps réel, et la transmission, par le dispositif de communication, de la réponse.

7. Le procédé selon la revendication 1, comprenant en outre :
l'exécution, par le dispositif de communication, d'un jugement de validité de flux de médias en vérifiant l'identifiant de flux de médias comporté dans le paquet de médias.

8. Le procédé selon la revendication 7, dans lequel l'exécution, par le dispositif de communication, d'un jugement de validité de flux de médias en vérifiant l'identifiant de flux de médias comporté dans le paquet de médias comprend :
la détermination, par le dispositif de communication, que le flux de médias en temps réel est valide en réponse à
la détermination que l'identifiant de flux de médias comporté dans le paquet de médias est inclus dans un ou plusieurs identifiants de flux de médias correspondant au port local ; et
la détermination, par le dispositif de communication, que le flux de médias en temps réel est invalide à la suite de la détermination que l'identifiant de flux de médias comporté dans le paquet de médias n'est pas inclus dans les un ou plusieurs identifiants de flux de médias correspondant au port local.

9. Le procédé selon la revendication 7, dans lequel, avant que le dispositif de communication n'exécute le jugement de validité de flux de médias, le procédé comprend en outre :
la détermination, par le dispositif de communication, qu'aucune route de transmission correspondante n'est incluse dans les informations d'adresse source dans le paquet de médias ;
dans lequel les informations d'adresse source comprennent une combinaison d'une adresse IP source et d'un numéro de port.

10. Le procédé selon la revendication 7, dans lequel, après que le dispositif de communication a exécuté le jugement de validité de flux de médias, le procédé comprend en outre :
l'enregistrement, par le dispositif de communication, d'une route de transmission correspondant à des informations d'adresse source dans le paquet de médias à la suite de la détermination que le flux de médias en temps réel est valide, et la transmission, par le dispositif de communication, de paquets de médias ultérieurs comportant le flux de médias en temps réel directement après la réception des paquets de médias ultérieurs ; et
le rejet, par le dispositif de communication, du paquet de médias comportant le flux de médias en temps réel à la suite de la détermination que le flux de médias en temps réel est invalide ;
facultativement, dans lequel, après que le dispositif de communication a exécuté le jugement de validité de flux de médias, le procédé comprend en outre :
l'enregistrement, par le dispositif de communication, d'informations d'adresse source dans le paquet de médias comportant le flux de médias en temps réel sous la forme d'une liste noire à la suite de la détermination que le flux de médias en temps réel est invalide, et le rejet, par le dispositif de communication, de paquets de médias ultérieurs comportant les informations d'adresse source après la réception des paquets de médias ultérieurs.

11. Un procédé d'accès à un flux de médias en temps réel, **caractérisé en ce qu'**il comprend :
la détermination (301), par un terminal, d'un identifiant de flux de médias correspondant à un flux de médias en temps réel dans un processus d'établissement d'une session de flux de médias en temps réel ; et
l'envoi (302), par le terminal, d'un paquet de médias comportant le flux de médias en temps réel après que la session de flux de médias en temps réel est établie, dans lequel le paquet de médias comporte l'identifiant de flux de médias, dans lequel
le terminal comprend un terminal appelant, et la détermination (301), par le terminal, de l'identifiant de flux de médias correspondant au flux de médias en temps réel dans le processus d'établissement de la session de flux de médias en temps réel comprend :
l'envoi, par le terminal, d'une demande de service pour le flux de médias en temps réel, dans lequel la demande de service comporte une capacité de prise en charge d'une authentification de flux de médias, et
la réception d'une réponse à la demande de service, dans lequel la réponse comporte un identifiant de flux de médias qui est un identifiant unique global attribué par un dispositif de communication ;
ou
l'envoi, par le terminal, d'une demande de service pour le flux de médias en temps réel, dans lequel la demande de service comporte une capacité de prise en charge d'une authentification de flux de médias et un identifiant de flux de médias attribué par le terminal,
la réception, par le terminal, d'une réponse à la demande de service ; et
la détermination, par le terminal, d'un identifiant de flux de médias contenu dans la réponse en tant qu'identifiant de flux de médias correspondant au flux de médias en temps réel, dans lequel l'identifiant de flux de médias comporté dans la réponse est l'identifiant de flux de médias attribué par le terminal si l'identifiant de flux de médias attribué par le terminal n'est pas occupé, et l'identifiant de flux de médias contenu dans la réponse est un identifiant unique global attribué par le dispositif de communication si l'identifiant de flux de médias attribué par le terminal est occupé.

12. Un dispositif de communication, **caractérisé en ce qu'**il comprend : une mémoire (1201), un processeur (1202) et un programme informatique (1203) stocké sur la mémoire (1201) et exécutable par le processeur (1202), dans lequel le processeur (1202) exécute le programme informatique (1203) pour réaliser le procédé d'accès à un flux de médias en temps réel selon l'une quelconque des revendications 1 à 10.

13. Un terminal, **caractérisé en ce qu'**il comprend : une mémoire (1301), un processeur (1302) et un programme informatique (1303) stocké sur la mémoire (1301) et exécutable par le processeur (1302), dans lequel le processeur (1302) exécute le programme informatique (1303) pour réaliser le procédé d'accès à un flux de médias en temps réel selon la revendication 11.

14. Un support de stockage lisible par ordinateur, **caractérisé par** le stockage d'une instruction exécutable par ordinateur, dans lequel l'instruction exécutable par ordinateur est configurée pour réaliser le procédé d'accès à un flux de médias en temps réel selon l'une quelconque des revendications 1 à 11.
